# FASCICULE DE BREVET EUROPEEN

(11) **EP 3 277 405 B1**
(45) Date de publication et mention de la délivrance du brevet: **17.06.2020**
(21) Numéro de dépôt: 16705230.7
(22) Date de dépôt: 25.01.2016
(51) Int. Cl.: B01D 53/50

(54) **PROCEDE ET DISPOSITIF POUR AMELIORER LA CAPTATION DU SO2 ISSU DES GAZ DE CUVES D'ELECTROLYSE PAR UN ENSEMBLE DE MODULES FILTRANTS**
VERFAHREN UND VORRICHTUNG ZUR VERBESSERUNG DER SO2-ABSCHEIDUNG AUS DEN GASEN VON ELEKTROLYSETANKS DURCH EINEN SATZ VON FILTERMODULEN
METHOD AND DEVICE FOR IMPROVING THE CAPTURE OF SO2 FROM THE GASES OF ELECTROLYSIS TANKS BY A SET OF FILTERING MODULES

(30) Priorité: 13.02.2015 FR 1551202
(43) Date de publication de la demande: 07.02.2018
(73) Titulaire: Fives Solios, 78230 Le Pecq (FR)
(72) Inventeur: CLOUTIER, Bernard, 78100 Saint Germain en Laye (FR); BOUHABILA, El Hani, 78100 Saint Germain en Laye (FR); COURAU, Alix, 78100 Saint Germain en Laye (FR)
(74) Mandataire: Plasseraud IP
(86) Numéro de dépôt international: PCT/FR2016/050141
(87) Numéro de publication internationale: WO 2016/128635

(56) Documents cités:
- EP-A1- 2 360 296
- WO-A1-96/15846
- WO-A1-2007/096492
- FR-A1- 2 984 366

## Description

La présente invention porte sur un procédé et un dispositif pour capter le dioxyde de soufre (SO₂) présent dans les gaz qui proviennent de cuves pour la production industrielle d'aluminium par électrolyse ignée. Ce procédé est mis en œuvre sur un centre de traitement des gaz comprenant au moins deux modules filtrants, traversés en parallèle par un flux de gaz à épurer, chaque module comprenant un réacteur à flux de gaz suivi d'un moyen de filtrage. Les réacteurs sont alimentés, au moins partiellement en au moins une série ou cascade, en un agent de sorption du type matière pulvérulente, notamment des particules d'alumine, apte à adsorber des effluents présents dans le flux gazeux par la mise en contact de l'agent de sorption avec le flux gazeux.

L'utilisation de particules d'alumine dans des réacteurs de traitement de gaz pour adsorber l'acide fluorhydrique (HF) présent dans les gaz émanant des cuves pour la production industrielle d'aluminium par électrolyse ignée est une technologie bien connue et efficace. Il est également connu que cette alumine, avec sa grande surface d'adsorption (jusqu'à 82m2/g), peut aussi, sous certaines conditions, adsorber le SO₂ également présent dans les gaz de cuve.

Bien que l'alumine adsorbe très facilement le SO₂, la captation du SO₂ présent dans les gaz provenant des cuves d'électrolyse n'est pas aisée car l'alumine adsorbe préférentiellement le HF par rapport au SO₂. Dans le cas où du HF et du SO₂ sont présents dans les gaz à traiter, pour pouvoir capter le SO₂, il est nécessaire d'utiliser une quantité suffisante d'alumine pour que celle-ci ne soit pas saturée après avoir adsorbé le HF. En effet, dans le cas où l'alumine serait saturée en SO₂ à la suite du traitement d'un gaz ne contenant pas de HF, ce SO₂ serait désorbé si cette alumine était mise en contact avec un gaz contenant du HF, le HF venant prendre la place du SO₂ sur les particules d'alumine. Or, dans une aluminerie, la quantité d'alumine disponible est limitée.

Le brevet EP 0 793 527 propose d'utiliser deux étages de traitement en série du flux de gaz à épurer dans un même module filtrant de sorte de capter successivement le HF puis le SO₂. Les gaz à traiter chargés en HF et SO₂ traversent un premier étage composé du réacteur où ils rencontrent de l'alumine régénérée. En sortie de ce réacteur, le HF est complètement adsorbé sur l'alumine. Les gaz sont alors dirigés vers un dispositif de séparation mécanique de l'alumine fluorée des gaz. En sortie de ce premier étage, les gaz sont ainsi épurés du HF. Ils sont ensuite dirigés vers le deuxième étage, le filtre, où de l'alumine fraîche est injectée pour capter le SO₂. L'alumine chargée en SO₂ est enfin dirigée vers un désorbeur où le SO₂ est extrait de l'alumine. L'alumine ainsi régénérée est renvoyée, à contre-courant par rapport au sens de circulation du flux gazeux, dans le premier étage de traitement et le SO₂ concentré est envoyé dans un système de valorisation. Cette solution n'est pas pleinement satisfaisante car elle nécessite un dispositif encombrant et coûteux de séparation de l'alumine fluorée dans le premier étage de traitement.

Pour pallier ces inconvénients, FR 2 984 366 propose un procédé d'adsorption de SO₂ applicable sur des modules filtrants placés en cascade (tels que définis par le brevet WO2007096492 de la Demanderesse), c'est-à-dire sur un groupe d'au moins deux modules filtrants alimentés d'une part en parallèle en gaz à traiter et d'autre part en au moins une série en agent de sorption et/ou de neutralisation chimique du type matière pulvérulente apte à adsorber des effluents présents dans ledit flux gazeux.

Dans ce procédé, l'agent de sorption qu'est l'alumine est suralimenté dans les premiers réacteurs ou réacteurs amont des filtres en cascade. Cette suralimentation, qui réduit la concentration du HF capté sur l'alumine permet alors d'absorber le SO₂. L'alumine qui circule en cascade d'un module au suivant, du module d'extrémité amont au module d'extrémité aval de la cascade, se charge progressivement en HF, réduisant alors sa capacité à capter le SO₂ dans le/les modules aval, jusqu'au point où le SO₂ n'est plus capté et est désorbé au contact des gaz fluorés des derniers modules de la cascade. Cette configuration permet d'exploiter la capacité de l'alumine fraiche à adsorber le SO₂ en l'utilisant notamment dans les premiers modules ou modules amont, c'est-à-dire dans les modules pour lesquels la quantité de fluor pris en charge par l'alumine n'est pas encore suffisante pour entraver l'adsorption du SO₂ ; dans les derniers modules ou module aval de la cascade, au contraire, la présence de fluor limite peu à peu, puis annule la capacité d'adsorption du SO₂ par l'alumine.

Ainsi, nous voyons que FR 2 984 366 propose un traitement du SO₂ particulièrement efficace sur le/les premiers modules d'une cascade dans lesquels l'alumine injectée et filtrée est la moins chargée en HF.
Par la présente invention, nous proposons un traitement ciblé sur le ou les derniers modules d'au moins une série de modules d'un centre de traitement des gaz, configuré en cascade selon WO 2007096492, qui permet d'obtenir une efficacité de captation du SO₂ ciblée sur les derniers modules, pour des coûts d'investissement et de fonctionnement limités.

Avantageusement, la présente invention peut être mise en œuvre en combinaison avec la solution selon FR 2 984 366 sur les premiers modules afin d'obtenir une efficacité globale renforcée. Elle peut aussi être mise en œuvre indépendamment, lorsque le rendement demandé sur le SO₂ reste limité.

L'invention consiste, selon un premier aspect, en un procédé de captation du SO₂ tel que défini dans la revendication 1.

Par ce procédé, l'efficacité de la captation du SO₂ est grandement augmentée.

L'agent de sorption est avantageusement de l'alumine Al₂O₃.

L'unité de désulfuration peut fonctionner selon un procédé sec, un procédé sec activé, un procédé semi-humide, ou un lavage.

Avantageusement, une partie de l'agent de sorption évacué par au moins l'avant-dernier module filtrant d'au moins une série de modules filtrants est déviée vers une conduite de sortie, tandis qu'une autre partie dudit agent de sorption évacué alimente le dernier module filtrant de ladite au moins une série de modules filtrants, de façon à saturer l'agent de sorption en fluor dans ledit dernier module filtrant ou à lui faire atteindre un niveau proche de sa saturation, et à forcer la libération de SO₂, préalablement adsorbé sur ledit agent de sorption dans la fraction du flux gazeux sortant dudit dernier module filtrant et dirigée vers ladite unité de désulfuration.

L'agent de sorption collecté, après son passage dans au moins un des modules filtrants du groupe, est évacué et directement dirigé vers les moyens d'injection d'au moins un autre des modules filtrants dudit groupe, sans étape intermédiaire de désorption du SO₂.

Ainsi, on réduit le nombre d'étapes du procédé et le nombre d'équipements, de sorte que les coûts sont diminués.

La fraction dudit flux gazeux sortant au moins du premier module filtrant, dans l'ordre d'alimentation en agent de sorption des modules filtrants de chaque série du groupe, est dirigée vers une cheminée d'évacuation sans passer par une unité de désulfuration. Selon un deuxième aspect, l'invention concerne un dispositif de captation du SO₂ tel que défini dans la revendication 8.

Avantageusement, pour améliorer le rendement de récupération du SO₂, une conduite de sortie est placée sur l'avant-dernier ou les avant-derniers modules filtrants d'un groupe de modules filtrants afin d'évacuer une partie de l'agent de sorption provenant dudit avant-dernier ou desdits avant-derniers modules filtrants, de façon à saturer l'agent de sorption en fluor dans le dernier ou les derniers modules filtrants ou à lui faire atteindre un niveau proche de sa saturation.

Le dispositif est de préférence dépourvu de moyens de désorption du SO₂ entre les moyens d'évacuation d'au moins un desdits modules filtrants du groupe et les moyens d'injection du module filtrant suivant dans l'ordre d'alimentation du groupe de modules filtrants en agent de sorption depuis ledit moyen de stockage.

L'emplacement du système de désulfuration en extrémité du centre de traitement des gaz permet d'obtenir une efficacité supérieure par rapport à ce même système de désulfuration placé à tout autre endroit de l'installation. En effet, de par la capacité du fluor à déplacer le SO₂ préalablement adsorbé de l'alumine vers les fumées, les fumées ayant traversé le ou les derniers modules de la ou chaque cascade se retrouvent naturellement les plus chargées en SO₂. Elles peuvent même avoir une concentration en SO₂ plus importante que celles des fumées d'entrée dans le centre de traitement. Elles sont ainsi en quelque sorte enrichies en SO₂ par le phénomène de relargage du SO₂ par l'alumine en présence de fluor HF dans les fumées.

Ce phénomène de relargage du SO₂ par l'alumine est directement lié à l'accroissement de la quantité de fluor adsorbé sur l'alumine au fur et à mesure qu'elle traverse en série les modules de la cascade. Plus l'alumine s'enrichit en fluor, moins elle est apte à capter le SO₂ jusqu'au point où la concentration en fluor déplace le SO₂ qui est alors relargué dans les fumées. On ne souhaite dès lors plus considérer les fumées quittant chacun des modules comme identiques, bien que chaque module soit alimenté par une fraction de flux gazeux identique en nature (concentration en polluants). Cette différentiation des fractions de flux sortantes et la mise en œuvre de l'invention est ainsi propre à l'installation de réacteurs en cascade selon le brevet WO 2007096492 de la Demanderesse et ne concerne pas les installations classiques où chaque filtre reçoit une quantité équivalente d'alumine fraiche qui est alimentée en parallèle aux réacteurs.

Le procédé de la présente invention s'appuie donc sur la capacité de l'alumine à capter le SO₂ lorsque la concentration de fluor gazeux sur l'alumine est faible ainsi que sur sa capacité à le relarguer lorsque la concentration de fluor gazeux sur cette alumine dépasse un certain seuil, et ce sans utiliser cette même alumine comme agent de sorption du SO₂. Il est paradoxal que l'alumine ne soit pas l'agent de sorption du SO₂ alors qu'elle joue un rôle essentiel à la mise en œuvre de l'invention. Ce procédé utilise en réalité de façon indirecte le potentiel de l'alumine à capter le SO₂ : il l'utilise non seulement pour adsorber le SO₂ dans les premiers modules mais aussi pour le relarguer sur le ou les dernier(s) module(s) qui est (sont) ensuite spécifiquement traités par une voie classique, par exemple de type sec activé ou laveur humide. Avantageusement, le potentiel de l'alumine est utilisé pour concentrer le polluant sur le dernier module filtrant, ou sur les derniers modules, en aval de la cascade. Avec cette concentration des fumées, l'application ciblée du système de désulfuration mise en œuvre selon l'invention permet d'obtenir un abattement de 20 à 50% selon les cas, et ce pour un coût d'investissement limité.

De plus, la fraction de flux gazeux sortant du ou des premiers modules filtrants, ou modules filtrants amont de l'installation, est dirigée vers une cheminée d'évacuation, sans passer par une unité de désulfuration, ce qui contribue à limiter l'investissement.

### Variantes

Selon une première variante de réalisation de l'invention, l'alumine est enrichie en fluor dans le dernier module de la cascade - celui-là même dont les gaz sortants sont traités par un système de désulfuration - en réduisant le débit d'alumine injecté dans ce dernier module. Par exemple, une partie du débit d'évacuation en alumine de l'avant-dernier module est déviée vers le système d'évacuation en by-passant le dernier module. Ainsi, l'alumine en moindre quantité se trouvant relativement en présence de davantage de fluor dans le dernier module, le phénomène d'adsorption préférentielle du HF conduit à un relargage accru du SO₂ par l'alumine dans ce module. A noter qu'il n'est pas souhaitable d'aller jusqu'à saturer l'alumine au détriment de la captation du fluor lui-même. Cependant, l'éventuel excédent de fluor gazeux, non adsorbé par l'alumine - dans le cas où elle atteindrait l'état de saturation en HF - peut être traité en même temps que le SO₂ par le système de désulfuration placé en aval du dernier module, car il est capable d'arrêter de petites quantités de fluor gazeux résiduel.

Selon une autre variante de réalisation de l'invention, les gaz provenant de l'avant-dernier module, ou encore de « n » modules situés en amont du dernier module de la cascade, c'est-à-dire situés vers l'extrémité aval de la cascade, sont également envoyés vers le système de désulfuration, en complément des gaz provenant du dernier module. Dans cette variante, le phénomène de relargage est exploité dès son apparition, ou peu de modules après son apparition, c'est-à-dire avant d'avoir atteint son niveau maximal dans le dernier module. Cette variante permet d'augmenter l'efficacité de captation du SO₂. Le nombre de modules aval à relier à un système de désulfuration dépend de la taille de l'installation, des caractéristiques des fumées à traiter, et du rendement d'arrêt du SO₂ voulu par le client. Le nombre de modules aval dont les gaz en sortie sont dirigés vers le système de désulfuration reste avantageusement inférieur à la moitié du nombre total de modules filtrants, car la quantité totale de fluor HF adsorbé par l'alumine sur la première moitié ou moitié amont d'une cascade est trop faible pour obtenir un relarguage du SO₂ exploitable. En effet l'alumine, loin d'être saturée, a encore de la marge pour capter à la fois le HF et le SO₂, et ce dernier reste donc en grande partie adsorbé sur le pulvérulent.
Enfin d'autres variantes de l'invention consistent à combiner les deux variantes précédemment décrites ci-dessus.

### Exemples de réalisations de l'invention

Selon un premier exemple de réalisation de l'invention uniquement illustratif de celle-ci, le centre de traitement des gaz comporte une cascade de cinq modules filtrants comprenant chacun un réacteur et un filtre. Concernant l'agent de sorption, le réacteur du premier module est alimenté uniquement en alumine fraiche en provenance d'un silo d'alumine et mise en contact avec la fraction du flux gazeux traversant ce premier réacteur en amont de la cascade. L'alumine filtrée et collectée issue du filtre du premier module est ensuite complètement canalisée vers les moyens d'injection du réacteur d'un deuxième module, qui lui est adjacent vers l'aval de la cascade. Le deuxième réacteur reçoit donc de l'alumine ayant déjà été mise en contact avec du fluor dans le 1^{er} réacteur. Le réacteur du deuxième module est également alimenté avec de l'alumine fraiche en provenance du silo d'alumine, dans des proportions de 25% d'alumine fraiche et de 75% d'alumine issue du premier module. Le deuxième filtre participe à la collecte de cette alumine qui est évacuée dans les moyens d'injection d'un troisième module qui lui est adjacent en aval. Ce troisième module reçoit donc de l'alumine ayant déjà été mise en contact avec du fluor dans les 1^{er} et 2^{ème} réacteurs. Ce troisième module ne reçoit pas d'alumine fraîche en provenance du moyen de stockage mais 100% d'alumine issue du deuxième module. Le troisième filtre collecte cette alumine qui est évacuée dans les moyens d'injection d'un quatrième module qui lui est adjacent en aval. Ce quatrième module reçoit donc de l'alumine ayant déjà été mise en contact avec du fluor dans les 1^{er}, 2^{ème} et 3^{ème} réacteurs. Le quatrième module évacue cette alumine dans les moyens d'injection du dernier module qui lui est adjacent vers l'aval. Ce dernier module reçoit donc de l'alumine ayant déjà été mise en contact avec du fluor dans tous les réacteurs amont. La quantité du fluor adsorbée sur cette alumine est donc maximale. Devant l'affluence de fluor, le filtre du cinquième module est propice au phénomène de relargage du SO₂. Les fumées qui sortent du 5^{ème} et dernier module filtrant sont davantage chargées en SO₂ que les gaz qui y entrent. A l'inverse, l'alumine évacuée par le 5^{ème} et dernier module est appauvrie en SO₂ par rapport à celle sortant du module précédent. Ce SO₂ passe naturellement de l'alumine vers les fumées. Les fumées sont ensuite directement conduites vers un système de désulfuration de petite taille, dimensionné pour le traitement de seulement 1/5 du débit total de fumées traitées par le centre de traitement des gaz, mais avec une concentration élevée en SO₂.

Avec un seul système de désulfuration positionné en sortie du 5^{ème} module, l'efficacité de captation du SO₂ du dernier module est de plus de 95% et l'efficacité globale du centre de traitement (5 modules) est d'environ 20 à 30% d'abattement du SO₂. Cette efficacité peut paraître limitée mais elle est en réalité intéressante au regard des moyens extrêmement réduits utilisés pour la mettre en œuvre.

Selon un second exemple de réalisation de l'invention, en reliant également la sortie du quatrième module au système de désulfuration, dimensionné pour le traitement de 2/5 du débit du centre de traitement de gaz, et avec le même rendement de l'installation de désulfuration elle-même vis-à-vis du débit qui la traverse, l'efficacité globale du centre de 5 modules est d'environ 40 à 50% d'abattement du SO₂. L'efficacité obtenue est intéressante au regard de son coût d'investissement.

Il est manifeste que l'avantage de l'invention est de pouvoir obtenir une efficacité de captation du SO₂ significative de 20% à 50% environ avec une installation de désulfuration de taille limitée puisque prenant en charge un débit de fumées peu important.

Le premier exemple de réalisation de l'invention avec cinq modules filtrants peut aussi être ré-agencé comme un centre de deux cascades, la première de trois modules en série et la seconde de deux modules filtrants en série, pour lequel les fumées issues des 3ème et 5ème modules, respectivement les derniers modules de chacune des cascades, sont dirigées vers le même système de désulfuration. Dans ce cas, la cascade constituée de seulement deux modules est, par exemple, alimentée par de l'alumine fraîche à son 1^{er} module uniquement. La cascade constituée de trois modules est, par exemple, alimentée par de l'alumine fraîche répartie en 80% sur le premier module, 20% sur le deuxième module, et 0% sur le troisième et dernier module, ce dernier étant relié au système de désulfuration.

La présente invention est à présent décrite plus en détail à l'aide d'exemples uniquement illustratifs et nullement limitatifs de la portée de l'invention et à partir des illustrations suivantes dans lesquelles :
- la figure 1 est une représentation schématique d'un centre de traitement gazeux selon un premier exemple de réalisation de l'invention.
- la figure 2 est une représentation analogue à celle de la figure 1 dans laquelle les deux modules filtrants aval sont reliés au système de désulfuration plutôt qu'un seul.
- la figure 3 est une représentation analogue à celles des figures 1 et 2 dans laquelle le centre de traitement des gaz est composé de deux cascades de modules filtrants.
- la figure 4 est une représentation analogue à celle de la figure 1 pour laquelle le débit d'agent de sorption évacué de l'avant-dernier module n'est pas totalement reversé vers le dernier module, une partie pouvant être déviée vers la conduite de sortie, le dernier module ne recevant pas d'agent de sorption frais.

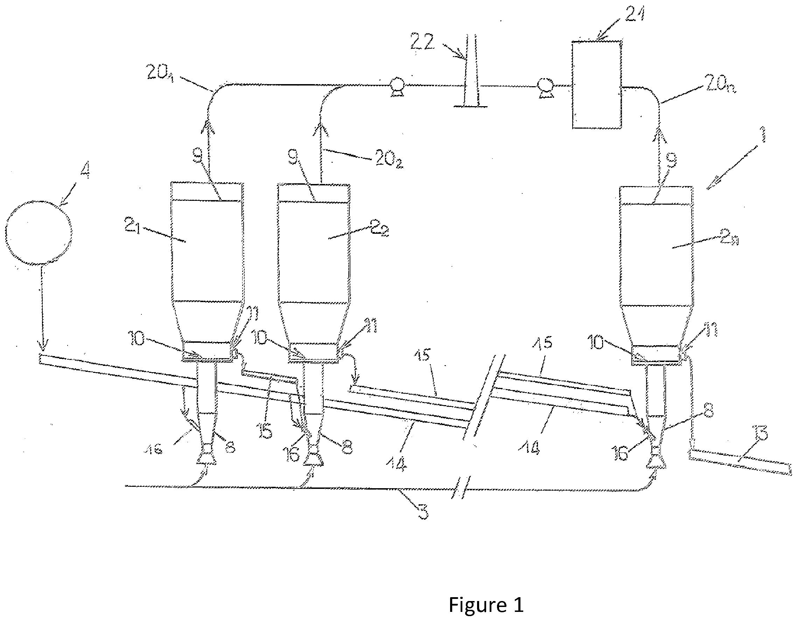

Comme représenté sur la figure 1, l'invention porte sur un centre de traitement des gaz 1 comportant n modules filtrants numérotés 2₁ à 2ₙ.

Le flux gazeux à traiter est distribué par une conduite 3 en parallèle dans les réacteurs 8 des n modules filtrants. Les fractions de flux gazeux issues des modules n sortent par des conduites 20₁ à 20ₙ et se rejoignent à une cheminée 22 du centre de traitement des gaz 1. Les fractions de flux conduites par les conduites 20i sont chargées d'une concentration en SO₂ croissante avec i ; par exemple le flux gazeux conduit par 20ₙ est plus chargé en SO₂ que le flux conduit par 20 ₙ₋₁ qui est lui-même plus chargé que le flux conduit par 20ₙ₋₂, etc.

Le réacteur 8 du premier module 2₁ ou module amont est alimenté uniquement en alumine fraiche jusqu'à son moyen d'injection 16, via une conduite de transport 14 alimentée par un moyen de stockage 4 d'alumine fraîche. Après sa sortie du 1^{er} module filtrant 2₁ par des moyens de collecte 10 et d'évacuation 11 du module 2₁, l'alumine est évacuée dans une conduite 15 qui rejoint un moyen d'injection 16 du réacteur 8 du second module 2₂,.pouvant également être alimenté en alumine fraîche par la conduite 14, en moindre quantité que le module amont 2₁. Il en va ainsi jusqu'au dernier module 2ₙ. L'agent de sorption qu'est l'alumine est évacué, à la sortie du dernier module 2ₙ ou module aval vers une conduite de sortie 13.
Le premier module 2₁ alimente en agent de sorption le second module 2₂ de sorte que l'alumine injectée dans le module 2₁ pour y être mise en contact avec la fraction de flux gazeux qui traverse ce module 2₁, puis filtrée et collectée dans ce module 2₁, est issue du module 2₁ en étant déjà légèrement chargée en fluor et se déverse dans le module 2₂. Le module 2₂ est alimenté en agent de sorption partiellement enrichi en polluant par le module 2₁ mais aussi en agent de sorption frais, type alumine fraiche par la conduite 14. La proportion d'alumine issue du module 2₁ et celle issue de la conduite 14 dépend des besoins de l'installation ; cette proportion peut être réglée différemment pour chaque module par des moyens appropriés, chaque module 2ᵢ restant connecté à la conduite 14 ; selon la philosophie de l'invention, le débit d'alumine fraîche véhiculée par la conduite 14 peut être le plus souvent nul pour la majorité des modules filtrants, mais reste modifiable en cas particulier. Après son passage dans le module 2₂, cette alumine est évacuée par la conduite d'évacuation 15 vers le module suivant et ainsi de suite. L'alumine évacuée par le dernier module 2ₙ dans la conduite de transport 13 a donc traversé l'ensemble des modules au travers desquels elle s'est successivement enrichie en fluor. Le module 2ₙ est le dernier module traversé par l'alumine. La fraction du flux de gaz sortant du dernier module 2ₙ par la conduite 20ₙ est dirigée vers l'unité de désulfuration 21. En sortie de l'unité de désulfuration 21, le flux de gaz traité (soit « Q/n » dans la configuration de la figure 1 avec Q le débit total de fumées traité par le centre 1) rejoint le débit restant soit « (n-1)^{∗}Q/n » à la cheminée 22, à laquelle aboutissent directement toutes les conduites 20₁ à 20ₙ₋₁ évacuant les fractions du flux gazeux traversant les modules filtrants 2₁ à 2ₙ₋₁, sans passer par l'unité 21 de désulfuration.

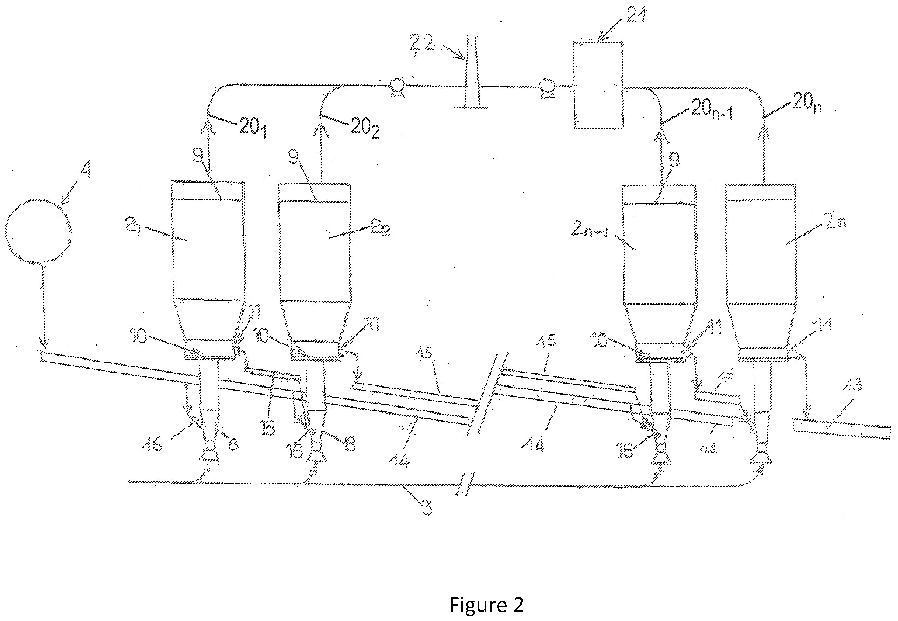

La figure 2 représente une variante de réalisation pour laquelle l'unité de désulfuration 21 traite les fractions de flux gazeux issues de plusieurs modules aval au lieu du seul dernier module 2ₙ. Ici, l'unité de désulfuration 21 traite les fractions de flux sortant du dernier module 2ₙ et de l'avant-dernier module 2ₙ₋₁. L'alimentation successive en alumine de l'ensemble des modules reste inchangée par rapport à la solution représentée en figure 1. L'unité de désulfuration 21 par contre traite un débit de gaz plus important, correspondant à « 2^{∗}Q/n » et ce flux rejoint le flux « (n-2)^{∗}Q/n » à la cheminée 22, puisque les conduites 20₁ à 20ₙ₋₂ de tous les modules sauf les deux derniers sont directement raccordées à cette cheminée 22. Cette variante de réalisation peut être déclinée avec un nombre supérieur de modules connectés à une ou plusieurs unité(s) de désulfuration 21. Le nombre de modules alimentant l'unité de désulfuration 21 est avantageusement inférieur à « n/2 » pour conserver l'intérêt économique de l'invention. Le nombre d'unités de désulfuration 21 peut être augmenté en fonction du débit à traiter.

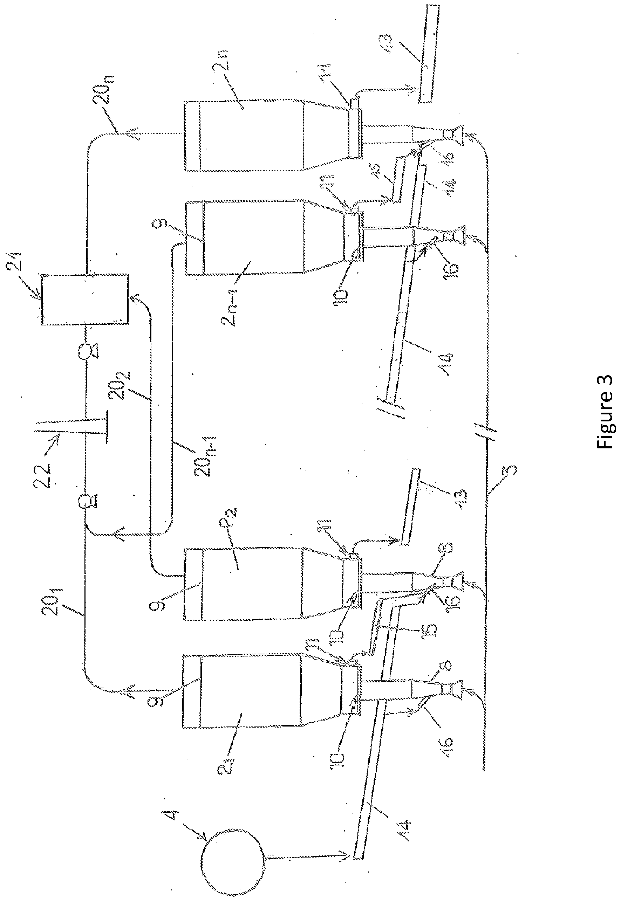

La figure 3 représente une autre variante de réalisation, proche de celle représentée figure 2, et dans laquelle le centre de traitement des gaz 1 est un ensemble de plusieurs cascades, deux par exemple, constituées de 2 modules filtrants en série chacune. Le deuxième module 2₂ ou 2ₙ de chaque cascade (2₁, 2₂) ou (2ₙ₋₁, 2ₙ) est relié par la conduite correspondante 20₂ ou 20ₙ à l'unité de désulfuration 21, c'est-à-dire que les fractions du flux de gaz sortant des modules 2₂ et 2ₙ sont traitées par le système de désulfuration 21. Le premier module, ou module amont 2₁ ou 2ₙ₋₁ de chaque cascade n'est alimenté qu'en alumine fraîche par la conduite de transport 14, à partir du moyen de stockage 4, et le second module 2₂ ou 2ₙ de chaque cascade est alimenté à la fois en alumine fraîche par la conduite 14 et en alumine collectée dans et issue du premier module 2₁ ou 2ₙ₋₁, l'alumine issue de chaque module aval 2₂ ou 2ₙ étant évacuée par la conduite 13.

Les conduites 20₁ et 20ₙ₋₁ d'évacuation des fractions de flux gazeux traversant les modules amont 2₁ et 2ₙ₋₁ des cascades sont reliées directement à la cheminée 22 sans passer par l'unité de désulfuration 21. Aucune unité de désulfuration n'est prévue pour traiter l'agent de sorption chargé d'effluents entre le moyen d'évacuation 11 d'un module amont et le moyen d'injection 16 du module aval adjacent.

Cette variante de réalisation peut être déclinée avec un nombre supérieur de cascades et de modules filtrants en série par cascade, par exemple 3, 4 ou 5 modules filtrants par cascade, le ou les dernier(s) module(s) de chaque cascade étant relié(s) à une ou plusieurs unité(s) de désulfuration telle que 21.

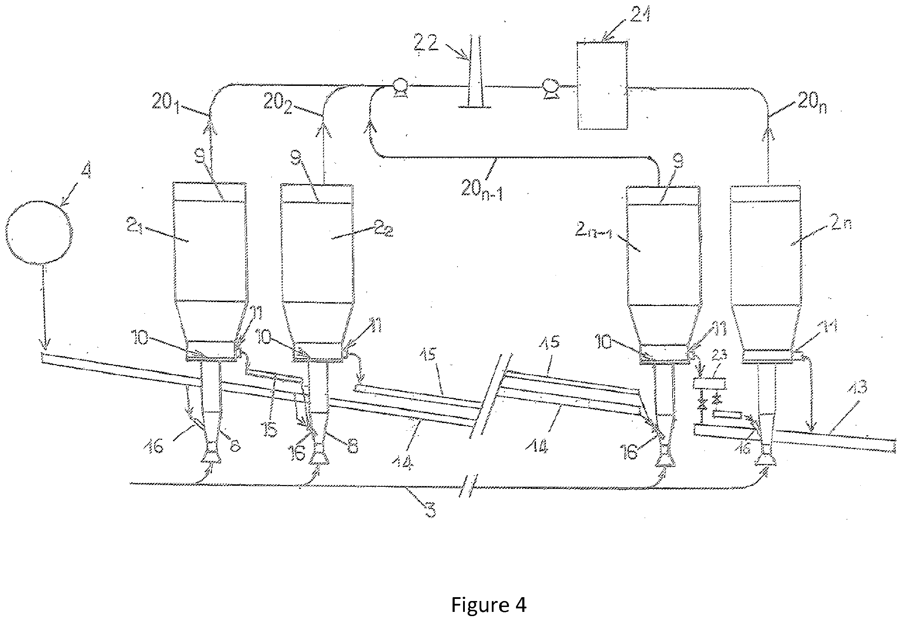

La figure 4 représente une variante de réalisation proche de celle de la figure 1 et dans laquelle le débit d'alumine évacué par l'avant-dernier module 2ₙ₋₁ n'est pas totalement injecté au dernier module 2ₙ. Une partie de ce débit est déviée directement dans la conduite de sortie 13. Une boîte de redirection 23 insérée entre la sortie d'alumine du module 2ₙ₋₁ et l'entrée d'alumine du module 2ₙ permet cette déviation. Une telle boîte 23 peut aussi être généralisée à tous les modules reliés à la ou aux unité(s) de désulfuration 21 avec une proportion de débit sortant à établir selon les besoins de l'installation au cas par cas. Comme expliqué ci-dessus, la concentration de SO₂ dans la fraction de flux gazeux traversant le module aval 2ₙ est augmentée par le largage forcé du SO₂ dû à l'adsorption préférée du HF par la moindre quantité d'alumine chargée en effluents injectée dans le module aval 2ₙ. De ce fait, sur la figure 4, la conduite 20ₙ évacuant la fraction de flux gazeux issue du module filtrant aval 2ₙ est la seule à rejoindre l'unité 21 de désulfuration, les autres conduites 20₁, 20₂ et 20ₙ₋₁ menant toutes les fractions de flux gazeux issues des autres modules 2₁, 2₂ et 2ₙ₋₁ directement à la cheminée 22.

Selon l'invention, le système de désulfuration peut être, par exemple, selon un procédé sec, un procédé sec activé dans lequel l'agent adsorbant a été préalablement humidifié, un procédé semi humide avec une injection limitée de liquide, un procédé humide du type lavage à l'eau de mer, ou tout autre lavage.

Selon l'invention, il n'est alors pas nécessaire de désorber le SO₂ de l'alumine après la mise en contact de l'alumine avec le flux gazeux à nettoyer dans chaque réacteur, mais l'alumine est directement envoyée dans le réacteur suivant, sans étape intermédiaire de nettoyage du SO₂, c'est-à-dire sans désorption du SO₂. Ainsi, le centre 1 de traitement des gaz se trouve simplifié, en ce qu'il est dépourvu entre les réacteurs 8 de moyens de désorption du SO₂ de l'alumine.

## Revendications

1. Procédé de captation du SO₂ présent dans des gaz à épurer, qui proviennent de cuves pour la production industrielle d'aluminium par électrolyse ignée, mis en œuvre sur un groupe d'au moins deux modules filtrants (2₁, 2₂, ..., 2ₙ) traversés en parallèle par un flux desdits gaz à épurer, lesdits modules filtrants étant alimentés depuis un moyen (4) de stockage, au moins partiellement en au moins une série ou cascade, en un agent de sorption du type matière pulvérulente, apte à adsorber des effluents présents dans le flux gazeux par la mise en contact de l'agent de sorption avec le flux gazeux, chaque module filtrant (2₁, 2₂, ..., 2ₙ,) du groupe présentant des moyens de collecte (10) dudit agent de sorption après mise en contact avec ledit flux gazeux (3) dans ledit module filtrant, et présentant des moyens d'évacuation (11) dudit agent de sorption collecté après ladite mise en contact avec ledit flux gazeux (3), sachant que, sauf pour ce qui concerne les moyens d'évacuation du dernier module filtrant de chaque série, dans l'ordre d'alimentation des modules filtrants (2₁, 2₂, ..., 2ₙ) en agent de sorption depuis le moyen (4) de stockage, un transfert d'agent de sorption collecté est permis par les moyens d'évacuation (11) vers des moyens d'injection (16) dans au moins un autre desdits modules filtrants (2₁, 2₂, ..., 2ₙ,) de ladite au moins une série, **caractérisé en ce que** la fraction du flux de gaz sortant au moins du dernier module filtrant (2ₙ₋₁; 2ₙ) de chaque série est dirigée vers une unité (21) de désulfuration, **et en ce que** la fraction du flux de gaz sortant au moins du premier module filtrant (2₁), dans l'ordre d'alimentation en agent de sorption des modules filtrants (2₁, 2₂, ... 2ₙ) de chaque série du groupe, est dirigée vers une cheminée d'évacuation (22) sans passer par l'unité (21) de désulfuration.

2. Procédé selon la revendication 1, **caractérisé en ce que** l'agent de sorption est de l'alumine Al₂O₃.

3. Procédé selon la revendication 1 ou la revendication 2, **caractérisé en ce que** l'unité (21) de désulfuration fonctionne selon un procédé sec, un procédé sec activé, un procédé semi humide, ou un lavage.

4. Procédé selon l'une quelconque des revendications précédentes **caractérisé en ce qu'**une partie de l'agent de sorption collecté évacué par au moins l'avant-dernier module filtrant (2ₙ₋₁) d'au moins une série de modules filtrants (2₁, 2₂, ..., 2ₙ) est déviée vers une conduite de sortie (13), tandis qu'une autre partie dudit agent de sorption collecté évacué alimente le dernier module filtrant (2ₙ) de ladite au moins une série de modules filtrants, de façon à saturer l'agent de sorption en fluor dans ledit dernier module filtrant (2ₙ) ou à lui faire atteindre un niveau proche de sa saturation, et à forcer la libération de SO₂, préalablement adsorbé sur ledit agent de sorption, dans la fraction du flux gazeux sortant dudit dernier module filtrant (2ₙ) et dirigée vers ladite unité de désulfuration (21).

5. Procédé selon l'une quelconque des revendications précédentes, dans lequel de l'agent de sorption collecté, après son passage dans au moins un des modules filtrants (2₁, 2₂, ..., 2ₙ) du groupe, est évacué et directement dirigé vers les moyens (16) d'injection d'au moins un autre des modules filtrants (2₁, 2₂, ..., 2ₙ) dudit groupe, sans étape intermédiaire de désorption du SO₂.

6. Dispositif de captation du SO₂ présent dans des gaz à épurer, qui proviennent de cuves pour la production industrielle d'aluminium par électrolyse ignée, comprenant :
- un moyen (4) de stockage dudit agent de sorption,
- un groupe d'au moins deux modules filtrants (2₁, 2₂, ..., 2ₙ) traversés en parallèle par un flux desdits gaz à épurer, lesdits modules filtrants étant alimentés, au moins partiellement en au moins une série ou cascade, en un agent de sorption du type matière pulvérulente issu du moyen (4) de stockage, l'agent de sorption étant apte à adsorber des effluents présents dans le flux gazeux par la mise en contact de l'agent de sorption avec le flux gazeux,
dans lequel chaque série comprend un premier module filtrant (2₁) et un dernier module filtrant (2ₙ), dans l'ordre d'alimentation des modules filtrants (2₁, 2₂, ..., 2ₙ) en agent de sorption depuis le moyen (4) de stockage, chaque module filtrant (2₁, 2₂, ..., 2ₙ,) présentant des moyens de collecte (10) dudit agent de sorption après mise en contact avec ledit flux gazeux (3) dans ledit module filtrant, et présentant des moyens d'évacuation (11) dudit agent de sorption collecté après ladite mise en contact avec ledit flux gazeux (3),
sachant que, sauf pour ce qui concerne les moyens d'évacuation appartenant au dernier module filtrant de chaque série, dans ledit ordre d'alimentation, les moyens d'évacuation (11) sont adaptés pour transférer l'agent de sorption collecté vers des moyens d'injection (16) dans au moins un autre desdits réacteurs (2₁, 2₂, , ..., 2ₙ,) du groupe, **caractérisé en ce qu'**il comprend :
- une unité (21) de désulfuration de la fraction du flux de gaz sortant au moins du dernier module filtrant (2ₙ₋₁, 2ₙ) dans ledit ordre d'alimentation du groupe de modules filtrants (2₁, 2₂, ..., 2ₙ), et
- une cheminée d'évacuation (22) configurée pour recevoir la fraction du flux de gaz sortant d'au moins le premier module filtrant (2₁) dans l'ordre d'alimentation en agent de sorption des modules filtrants (2₁, 2₂, ... 2ₙ) de chaque série du groupe, sans passage par l'unité (21) de désulfuration.

7. Dispositif selon la revendication 6, **caractérisé en ce qu'**une conduite de sortie (13) est placée sur l'avant-dernier ou les avant-derniers modules filtrants (2ₙ₋₁) d'un groupe de modules filtrants (2₁, 2₂, ..., 2ₙ) afin d'évacuer une partie de l'agent de sorption provenant dudit avant-dernier (2ₙ₋₁) ou desdits avant-derniers modules filtrants, de façon à saturer l'agent de sorption en fluor dans le dernier ou les derniers modules filtrants (2ₙ) ou à lui faire atteindre un niveau proche de sa saturation.

8. Dispositif selon l'une quelconque des revendications 6 ou 7, **caractérisé en ce qu'**il est dépourvu de moyens de désorption du SO₂ entre les moyens d'évacuation (11) d'au moins un desdits modules filtrants (2₁, 2₂, ..., 2ₙ) du groupe et les moyens d'injection (16) du module filtrant (2₁, 2₂, ..., 2ₙ) suivant dans l'ordre d'alimentation du groupe de modules filtrants (2₁, 2₂, ..., 2ₙ) en agent de sorption depuis ledit moyen (4) de stockage.

## Patentansprüche

1. Verfahren zur Abscheidung des SO₂, das in zu reinigenden Gasen vorhandenen ist, die von Tanks für die industrielle Herstellung von Aluminium durch Schmelzflusselektrolyse stammen, das an einem Satz von mindestens zwei Filtermodulen (2₁, 2₂, ... 2ₙ) eingesetzt wird, die parallel von einem Strom der zu reinigenden Gas durchquert werden, wobei die Filtermodule von einem Speichermittel (4), zumindest teilweise in mindestens einer Reihe oder Kaskade, mit einem Sorptionsmittel vom Typ pulverförmiges Material versorgt werden, das geeignet ist, in dem Gasstrom vorhandene Abflüsse durch die Kontaktierung des Sorptionsmittels mit dem Gasstrom zu adsorbieren, wobei jedes Filtermodul (2₁, 2₂, ... 2ₙ) des Satzes Sammelmittel (10) des Sorptionsmittels nach Kontaktierung mit dem Gasstrom (3) in dem Filtermodul aufweist und Ableitungsmittel (11) des gesammelten Sorptionsmittels nach der Kontaktierung mit dem Gasstrom (3) aufweist, mit Ausnahme der Ableitungsmittel des letzten Filtermoduls jeder Reihe in der Versorgungsreihenfolge der Filtermodule (2₁, 2₂, ... 2ₙ) mit Sorptionsmittel vom Speichermittel (4), ein Transfer von gesammeltem Sorptionsmittel durch die Ableitungsmittel (11) zu Einspritzmitteln (16) in mindestens ein weiteres der Filtermodule (2₁, 2₂, ... 2ₙ) der mindestens einen Reihe ermöglicht wird, **dadurch gekennzeichnet, dass** die Fraktion des Gasstroms, die zumindest aus dem letzten Filtermodul (2ₙ₋₁; 2ₙ) jeder Reihe austritt, zu einer Entschwefelungseinheit (21) geleitet wird, und dass die Fraktion des Gasstroms, die zumindest aus dem ersten Filtermodul (2₁) in der Versorgungsreihenfolge mit Sorptionsmittel der Filtermodule (2₁, 2₂, ... 2ₙ) jeder Reihe des Satzes austritt, zu einem Ableitkamin (22) geleitet wird, ohne die Entschwefelungseinheit (21) zu durchqueren.

2. Verfahren nach Anspruch 1, **dadurch gekennzeichnet, dass** das Sorptionsmittel Aluminiumoxid Al₂O₃ ist.

3. Verfahren nach Anspruch 1 oder Anspruch 2, **dadurch gekennzeichnet, dass** die Entschwefelungseinheit (21) nach einem Trockenverfahren, einem aktivierten Trockenverfahren, einem Halbnassverfahren oder einem Waschen funktioniert.

4. Verfahren nach einem der vorhergehenden Ansprüche, **dadurch gekennzeichnet, dass** ein Teil des gesammelten, durch mindestens das vorletzte Filtermodul (2ₙ₋₁) mindestens einer Reihe von Filtermodulen (2₁, 2₂, ... 2ₙ) abgeleiteten Sorptionsmittels zu einer Ausgangsleitung (13) abgeleitet wird, während ein weiterer Teil des gesammelten abgeleiteten Sorptionsmittels das letzte Filtermodul (2ₙ) der mindestens einen Reihe von Filtermodulen versorgt, um das Sorptionsmittel mit Fluor in dem letzten Filtermodul (2ₙ) zu sättigen oder es ein Niveau nahe der Sättigung erreichen zu lassen, und um die Freigabe von vorher auf dem Sorptionsmittel adsorbiertem SO₂ in die Fraktion des Gasstroms zu forcieren, der aus dem letzten Filtermodul (2ₙ) austritt und zu der Entschwefelungseinheit (21) geleitet wird.

5. Verfahren nach einem der vorhergehenden Ansprüche, bei dem das gesammelte Sorptionsmittel nach seinem Durchgang durch mindestens eines der Filtermodule (2₁, 2₂, ... 2ₙ) des Satzes abgeleitet und direkt zu den Einspritzmitteln (16) mindestens eines weiteren der Filtermodule (2₁, 2₂, ... 2ₙ) des Satzes ohne Zwischenschritt einer Desorption des SO₂ geleitet wird.

6. Vorrichtung zur Abscheidung des SO₂, das in zu reinigenden Gasen vorhandenen ist, die von Tanks für die industrielle Herstellung von Aluminium durch Schmelzflusselektrolyse stammen, umfassend:
- ein Speichermittel (4) des Sorptionsmittels,
- einen Satz von mindestens zwei Filtermodulen (2₁, 2₂, ... 2ₙ), die parallel von einem Strom der zu reinigenden Gas durchquert werden, wobei die Filtermodule zumindest teilweise in mindestens einer Reihe oder Kaskade, mit einem Sorptionsmittel vom Typ pulverförmiges Material versorgt wird, das aus dem Speichermittel (4) stammt, wobei das Sorptionsmittel geeignet ist, in dem Gasstrom vorhandene Abflüsse durch die Kontaktierung des Sorptionsmittels mit dem Gasstrom zu adsorbieren, wobei jede Reihe ein erstes Filtermodul (2₁) und ein letztes Filtermodul (2ₙ) in der Versorgungsreihenfolge der Filtermodule (2₁, 2₂, ... 2ₙ) mit Sorptionsmittel vom Speichermittel (4) umfasst, wobei jedes Filtermodul (2₁, 2₂, ... 2ₙ) Sammelmittel (10) des Sorptionsmittels nach Kontaktierung mit dem Gasstrom (3) in dem Filtermodul aufweist und Ableitungsmittel (11) des gesammelten Sorptionsmittels nach der Kontaktierung mit dem Gasstrom (3) aufweist, mit Ausnahme der Ableitungsmittel des letzten Filtermoduls jeder Reihe in der Versorgungsreihenfolge, wobei die Ableitungsmittel (11) geeignet sind, das gesammelte Sorptionsmittel zu Einspritzmitteln (16) in mindestens einen weiteren der Reaktoren (2₁, 2₂, ... 2ₙ) des Satzes zu transferieren, **dadurch gekennzeichnet, dass** sie umfasst:
- eine Entschwefelungseinheit (21) der Fraktion des Gasstroms, der zumindest aus dem letzten Filtermodul (2ₙ₋₁, 2ₙ) in der Versorgungsreihenfolge der Filtermodule (2₁, 2₂, ... 2ₙ) austritt, und
- einen Ableitkamin (22), der eingerichtet ist, um die Fraktion des Gasstroms aufzunehmen, der aus zumindest dem ersten Filtermodul (2₁) in der Versorgungsreihenfolge mit Sorptionsmittel der Filtermodule (2₁, 2₂, ... 2ₙ) jeder Reihe des Satzes austritt, ohne die Entschwefelungseinheit (21) zu durchqueren.

7. Vorrichtung nach Anspruch 6, **dadurch gekennzeichnet, dass** die Ausgangsleitung (13) auf dem vorletzten oder den vorletzten Filtermodulen (2ₙ₋₁) eines Satzes von Filtermodulen (2₁, 2₂, ... 2ₙ) angeordnet wird, um einen Teil des Sorptionsmittels, der von dem vorletzten (2ₙ₋₁) oder den vorletzten Filtermodulen stammt, abzuleiten, um das Sorptionsmittel mit Fluor in dem letzten oder den letzten Filtermodulen (2ₙ) zu sättigen oder es ein Niveau nahe der Sättigung erreichen zu lassen.

8. Vorrichtung nach einem der Ansprüche 6 oder 7, **dadurch gekennzeichnet, dass** sie keine Mittel zur Desorption des SO₂ zwischen den Ableitungsmitteln (11) mindestens eines der Filtermodule (2₁, 2₂, ... 2ₙ) des Satzes und den Einspritzmitteln (16) des folgenden Filtermoduls (2₁, 2₂, ... 2ₙ) in der Versorgungsreihenfolge des Satzes von Filtermodulen (2₁, 2₂, ... 2ₙ) mit Sorptionsmittel vom Speichermittel (4) aus umfasst.

## Claims

1. A method for capturing SO₂ present in gases to be purified, which come from tanks for the industrial production of aluminium by fused-salt electrolysis, implemented on a group of at least two filter modules (2₁, 2₂, ..., 2ₙ) traversed in parallel by a flow of said gases to be purified, said filter modules being at least partially supplied from a storage means (4), in at least one series or cascade, in a sorption agent of the pulverulent material type, capable of adsorbing effluents present in the gas flow by bringing the sorption agent into contact with the gas flow, each filter module (2₁, 2₂, ..., 2ₙ,) of the group having means for collecting (10) said sorption agent after being brought into contact with said gas flow (3) in said filter module, and having means for discharging (11) said collected sorption agent after said contact with said gas flow (3),
knowing that, except for the discharge means of the last filter module of each series, in the order of supply of the filter modules (2₁, 2₂,..., 2ₙ) with sorption agent from the storage means (4), a transfer of collected sorption agent is permitted by the discharge means (11) to the injection means (16) in at least one other of said filter modules (2₁, 2₂, ..., 2ₙ,) of said at least one series, **characterised in that** the gas flow fraction leaving at least the last filter module (2ₙ₋₁; 2ₙ) of each series is directed to a desulphurisation unit (21), and **in that** the gas flow fraction leaving at least the first filter module (2₁), in the order of supplying sorption agent to the filter modules (2₁, 2₂, ... 2ₙ) of each series of the group, is directed to a discharge chimney (22) without passing through the desulphurisation unit (21).

2. The method according to claim 1, **characterised in that** the sorption agent is alumina Al₂O₃.

3. The method according to claim 1 or claim 2, **characterised in that** the desulphurisation unit (21) operates according to a dry method, an activated dry method, a semi-wet method, or a washing.

4. The method according to any one of the preceding claims, **characterised in that** a part of the collected sorption agent discharged by at least the penultimate filter module (2ₙ₋₁) from at least one series of filter modules (2₁ , 2₂, ..., 2ₙ) is diverted towards an outlet conduit (13), while another part of said discharged collected sorption agent supplies the last filter module (2ₙ) of said at least one series of filter modules, so as to saturate the sorption agent with fluorine in said last filter module (2ₙ) or to make it reach a level close to its saturation, and to force the release of SO₂, previously adsorbed on said sorption agent, in the gas flow fraction leaving said last filter module (2ₙ) and directed towards said desulphurisation unit (21).

5. The method according to any one of the preceding claims, wherein the sorption agent collected, after its passage through at least one of the filter modules (2₁, 2₂, ..., 2ₙ) of the group, is discharged and directly directed towards the injection means (16) of at least another of the filter modules (2₁, 2₂, ..., 2ₙ) of said group, without an intermediate SO₂ desorption step.

6. A device for capturing SO₂ present in gases to be purified, which come from tanks for the industrial production of aluminium by fused-salt electrolysis, comprising:
- a means (4) for storing said sorption agent,
- a group of at least two filter modules (2₁, 2₂, ..., 2ₙ) traversed in parallel by a flow of said gases to be purified, said filter modules being at least partially supplied, in at least one series or cascade, in a sorption agent of the pulverulent material type from the storage means (4), the sorption agent being capable of adsorbing effluents present in the gas flow by bringing the sorption agent in contact with the gas flow,
wherein each series comprises a first filter module (2₁) and a last filter module (2ₙ), in the order of supply of the filter modules (2₁, 2₂, ..., 2ₙ) with a sorption agent from the storage means (4), each filter module (2₁, 2₂, ..., 2ₙ,) having means for collecting (10) said sorption agent after being brought into contact with said gas flow (3) in said filter module, and having means (11) for discharging said sorption agent collected after said contact with said gas flow (3),
knowing that, except for the discharge means belonging to the last filter module of each series, in said supply order, the discharge means (11) are adapted to transfer the collected sorption agent to injection means (16) in at least another of said reactors (2₁, 2₂, ..., 2ₙ,) of the group, **characterised in that** it comprises:
- a unit (21) for desulphurising the gas flow fraction leaving at least the last filter module (2ₙ₋₁, 2ₙ) in said order of supply of the filter module (2₁, 2₂, ...,2ₙ) group, and
- a discharge chimney (22) configured to receive the gas flow fraction leaving at least the first filter module (2₁) in the order of supplying sorption agent to the filter modules (2₁, 2₂, ... 2ₙ) of each series of the group, without passing through the desulphurisation unit (21).

7. The device according to claim 6, **characterised in that** an outlet conduit (13) is placed on the penultimate filter module(s) (2ₙ₋₁) of a group of filter modules (2₁, 2₂, ..., 2ₙ) in order to discharge part of the sorption agent from said penultimate (2ₙ₋₁) filter module(s), so as to saturate the sorption agent with fluorine in the last filter module(s) (2ₙ) or to make it reach a level close to its saturation.

8. The device according to any one of claims 6 or 7, **characterised in that** it is devoid of means for desorption of SO₂ between the discharge means (11) of at least one of said filter modules (2₁, 2₂, ..., 2ₙ) of the group and the injection means (16) of the following filter module (2₁, 2₂, ..., 2ₙ) in the order of supply of the filter module (2₁, 2₂, ..., 2ₙ) group with a sorption agent from said storage means (4).
